# EUROPÄISCHE PATENTANMELDUNG

(11) **EP 4 265 673 A1**
(43) Veröffentlichungstag der Anmeldung: **25.10.2023**
(21) Anmeldenummer: 22169600.8
(22) Anmeldetag: 22.04.2022
(51) Int. Cl.: C08J 9/236, B29B 17/00, B29C 67/20, C08J 9/33, C08J 9/35

(54) **VERFAHREN ZUR HERSTELLUNG VON SCHAUMSTOFFFORMTEILEN, -BLÖCKEN ODER -ZYLINDERN**

(71) Anmelder: Covestro Deutschland AG, 51373 Leverkusen (DE)
(72) Erfinder: Hess, Dominik, 51375 Leverkusen (DE); Pielasch, Andreas, 51427 Bergisch Gladbach (DE)
(74) Vertreter: Levpat

(57) **Zusammenfassung**

Die Erfindung betrifft ein Verfahren zur Herstellung von Formteilen, Blöcken oder Zylindern aus Flocken durch die sogenannte Presswerkstofftechnik, durch Presswerkstofftechnik hergestellte Formteile, Blöcke oder Zylinder und ihre Verwendung.

## Beschreibung

Die vorliegende Erfindung betrifft ein Verfahren zur Herstellung von Formteilen, Blöcken oder Zylindern aus Flocken durch die sogenannte Presswerkstofftechnik, durch Presswerkstofftechnik hergestellte Formteile, Blöcke oder Zylinder und ihre Verwendung.

Die Herstellung von Polyurethan (PU)-Formteilen aus PU-Weichschaumstoffflocken, insbesondere das Recycling von PU-Weichschaumstoffresten, mit Hilfe der Presswerkstofftechnik ist bekannt. Dabei werden PU-Weichschaumstoffreste zerkleinert, mit einem 1- oder 2-Komponenten-Kleber (meistens auf Isocyanatbasis, wobei alternativ auch thermoplastische Materialien oder Phenolharze als Kleber zum Einsatz kommen können) versetzt und mit Wasserdampf ausgehärtet. Im Falle der Herstellung von Blöcken oder Zylindern werden diese zu Formteilen, Bahnenware oder Platten weiterverarbeitet. Die Herstellung der Blöcke/Zylinder oder der Formteile kann unter Mitverwendung von weiteren Materialien, wie z.B. Füllstoffen, Verstärkungsstoffen, z.B. Fasern, oder Zusatzmitteln, z.B. Flammschutzmitteln erfolgen. Es können auch anstelle von Blöcken bzw. Zylindern direkt Formteile hergestellt werden. Anstelle von Weichschaum werden auch PU-Elastomerschaumstoffreste in geringen Mengen mit dieser Technologie verwertet.

Die so hergestellten Blöcke, Zylinder oder Formteile werden in verschiedenen Industriebereichen wie Möbel, Bau, Freizeit, Sport oder Umwelttechnik eingesetzt, z.B. für Comfort-Anwendungen wie Polstermöbel, Teppichhinterklebungen, Autoinnenraumanwendungen wie Kopfstützen und Einlagen für Sitze, Matratzen, Verpackungen und Akustikdämmungen und zum Schallschutz.

Die Presswerkstofftechnik ist für PU-Weichschaumstoffflocken beispielsweise in EP 1097798, WO 2001/00718, US 6136870, JP-A 10 193 356, JP-A 09 302 219, WO 95/29951, WO 95/514055, EP-A 976 518 und DE-A 29 810 967 sowie G. Oertel, Polyurethane, Kunststoffhandbuch, 3. Auflage 1993, S. 210; W. Raßhofer, Recycling von Polyurethan-Kunststoffen, Hüthig-Verlag 1994, S. 139 und W. Raßhofer und E. Weigand, Recycling of Automotive Polyurethanes, Technomic Publ., 2001, S. 65 beschrieben.

EP 1375104 offenbart die Verwendung von Hartschaumstoffflocken aus Polyurethan in einem Verfahren auf Basis der Presswerkstofftechnik zur Herstellung von PU-Formteilen. Hier werden offenzellige Hartschaumstoffe verwendet, um die PU-Formteile zu erhalten, die für die Verwendung zum Beispiel in Autoinnenraumanwendungen wie Dachhimmel und Ladeböden vorgesehen sind.

Dem Stand der Technik ist gemein, dass die eingesetzten Flocken aus Schaumstoff bestehen, der zur thermischen Isolierung ungeeignet ist, der also entweder ein Weichschaumstoff ist oder ein wenigstens zu einem bestimmten Anteil offenzelliger Hartschaumstoff.

Aufgabe der vorliegenden Erfindung war es, ein Verfahren auf Basis der Presswerkstofftechnik bereitzustellen, durch das ein Formteil, Block oder Zylinder hergestellt werden kann, das bzw. der sowohl gute thermische Isolierung als auch wünschenswerte mechanische Eigenschaften wie gute Dimensionsstabilität und/oder - je nach Anwendungsgebiet - ausreichende Flexibilität oder ausreichende Druckfestigkeit, aufweist, insbesondere wobei zu deren Herstellung Schaumstoffproduktionsreststoffe, post-consumer-Schaumstoffe und/oder Schaumstoffverschnitte verwendet werden können.

Im Sinne dieser Anmeldung handelt es sich bei Schaumstoffproduktionsreststoffen um Schaumstoffe, die bei der Produktion von Schaumstoffprodukten als Abfall angefallen sind, beispielsweise produktionstechnisch bedingt entstehende Schaumstoffteile, die nicht zum eigentlich erwünschten Schaumstoffprodukt gehören und daher abgetrennt worden sind.

Im Sinne dieser Anmeldung handelt es sich bei post-consumer-Schaumstoffen um Schaumstoffe, die bei Verbrauchern, beispielsweise Privatpersonen, als Abfallprodukte angefallen sind.

Im Sinne dieser Anmeldung handelt es sich bei Schaumstoffverschnitten, um Schaumstoffe, die bei der industriellen Weiterverarbeitung von Schaumstoffen als Abfallprodukte angefallen sind.

Im Sinne dieser Anmeldung umfasst der Begriff "Block" auch flache Blöcke, also Platten.

Gelöst wurde die Aufgabe durch ein Verfahren zur Herstellung von Formteilen, Blöcken oder Zylindern umfassend die Schritte
i. Bereitstellen von
   A. Schaumstoffflocken umfassend
      A1. 0 - 50 Gew.-%, bezogen auf die Gesamtmenge an Schaumstoffflocken, Flocken aus Weichschaumstoff und
      A2.50 - 100 Gew.-%, bezogen auf die Gesamtmenge an Schaumstoffflocken, Flocken aus Isolierungsschaumstoff, der eine Geschlossenzelligkeit von wenigstens 80%, bestimmt nach ISO 4590:2002, und eine Wärmeleitfähigkeit von höchstens 30 mW m⁻¹K⁻¹, bestimmt nach DIN EN 13165, aufweist,
      wobei die Summe der Mengen an A1 und A2 100 Gew.-% ergibt,
   B. einem bei 20 °C flüssigen Bindemittel, das wenigstens eine reaktionsfähige Isocyanatgruppen aufweisende Komponente und weniger als 0,5 Gew.-% physikalisches Treibmittel umfasst, bezogen auf die Gesamtmenge an Bindemittel,
   C. gegebenenfalls Zusatz- und/oder Hilfsmitteln;
ii. Vermischen der in Schritt i. bereitgestellten Schaumstoffflocken und des in Schritt i. bereitgestellten Bindemittels sowie gegebenenfalls der in Schritt i. bereitgestellten Zusatz- und/oder Hilfsmittel, um ein Gemisch zu erhalten;
iii. Befüllen einer Form mit dem in Schritt ii. erhaltenen Gemisch oder Auftragen des in Schritt ii. erhaltenen Gemischs auf eine Form, um einen Flockenkuchen zu erhalten;
iv. Verdichten des Flockenkuchens um einen Verdichtungsfaktor VF ≥ 1,2 und
   Erwärmen des Flockenkuchens, um das Formteil, den Block oder den Zylinder zu erhalten, wobei das Erwärmen während und/oder nach dem Verdichten erfolgt;
v. Entformen des Formteils, Blocks oder Zylinders.

Es werden also in einem Schritt i. Schaumstoffflocken A und Bindemittel B bereitgestellt, optional werden auch Zusatz- und/oder Hilfsmittel C bereitgestellt. Die Schaumstoffflocken umfassen 0-50 Gew.-%, bezogen auf die Gesamtmenge an Schaumstoffflocken, Flocken aus Weichschaumstoff A1 und 50 - 100 Gew.-%, bezogen auf die Gesamtmenge an Schaumstoffflocken, Flocken aus Isolierungsschaumstoff A2, wobei der Isolierungsschaumstoff eine Geschlossenzelligkeit von wenigstens 80%, bestimmt nach ISO 4590:2002, und eine Wärmeleitfähigkeit von höchstens 30 mW m⁻¹K⁻¹, bestimmt nach DIN EN 13165, aufweist, wobei die Summe der Mengen an A1 und A2 100 Gew.-% ergibt. Es werden also erfindungsgemäß Flocken aus Isolierungsschaumstoff bereitgestellt, neben denen auch Flocken aus Weichschaumstoff bereitgestellt werden können. Bei dem Bindemittel handelt es sich um ein bei 20 °C flüssiges Bindemittel, das wenigstens eine reaktionsfähige Isocyanatgruppen aufweisende Komponente und weniger als 0,5 Gew.-% physikalisches Treibmittel umfasst, das also im Laufe des Verfahrens selbst keinen oder, beispielsweise auf Grund von Reaktionen mit Restfeuchte in den bereitgestellten Schaustoffflocken, nur in so geringem Maße Schaumstoff ausbildet, dass der Fachmann es nicht als Schaumstoff kategorisiert.

In einem Schritt ii. werden die im Schritt i. bereitgestellten Komponenten A und B sowie gegebenenfalls C vermischt, wodurch ein Gemisch erhalten wird. Der Schritt ii. kann kontinuierlich oder diskontinuierlich durchgeführt werden. Bei diskontinuierlichem Vermischen wird eine definierte Menge an Bindemittel mit einer definierten Menge an Schaumstoffflocken vermischt; zum Beispiel in einem diskontinuierlichen Mischer, der die Schaumstoffflocken enthält, zu denen das Bindemittel gegeben wird. Der Schritt ii. kann in diesem Fall zum Beispiel bis zu 10 min dauern. Bei kontinuierlichem Vermischen wird ein definierter Massenstrom von Schaumstoffflocken mit einem definierten Massenstrom von Bindemittel in Kontakt gebracht; zum Beispiel werden Schaumstoffflocken kontinuierlich durch eine Mischtrommel transportiert, in die an wenigstens einer Position kontinuierlich Bindemittel eingebracht wird. Der Schritt ii. kann in diesem Fall weniger als 60 s, zum Beispiel weniger als 15 s dauern.

In einem Schritt iii. wird eine Form, beispielsweise ein geschlossenes Werkzeug, mit dem Gemisch befüllt oder wird das Gemisch auf eine Form, beispielsweise ein Förderband, aufgetragen, wodurch jeweils ein Flockenkuchen erhalten wird.

In einem Schritt iv. wird der Flockenkuchen um einen Verdichtungsfaktor VF verdichtet, wobei VF wenigstens 1,2 beträgt. Der Verdichtungsfaktor ist hierbei der Quotient aus der Dichte des verdichteten Flockenkuchens und der Dichte des Flockenkuchens. Beträgt beispielsweise die Dichte des Flockenkuchens 25 kg m⁻³ und wird dieser auf einen verdichteten Flockenkuchen mit einer Dichte von 50 kg m⁻³ verdichtet, beträgt VD = 50 kg m⁻³/25 kg m⁻³ = 2. Bevorzugt beträgt der Verdichtungsfaktor wenigstens 1,5, mehr bevorzugt wenigstens 1,7, am meisten bevorzugt wenigstens 2,0. Beispielsweise kann eine Höchstgrenze für den Verdichtungsfaktor 6 betragen. Weiterhin wird im Schritt iv. der Flockenkuchen erwärmt, um das Formteil, den Block oder den Zylinder zu erhalten, das bzw. der in einem Schritt v. entformt wird. Das Verfahren kann so durchgeführt werden, dass zunächst verdichtet wird, bevor erwärmt wird, oder es kann zeitgleich verdichtet und erwärmt werden, oder es kann zunächst verdichtet werden und zeitgleich zum Verdichten erwärmt werden. Im letzteren Fall kann zum Beispiel das Verdichten in zwei oder mehr Teilschritten vorgenommen werden, wobei das Erwärmen während eines Teilschritts, der nicht der erste Teilschritt ist, stattfindet.

Vorteil der erfindungsgemäß hergestellten Formteile, Blöcke und Zylinder bzw. des Verfahrens zu ihrer Herstellung ist, dass Schaumstoffproduktionsreststoffe, die insbesondere bei der diskontinuierlichen Herstellung von Schaumstoffen anfallen, post-consumer-Schaumstoffe und Schaumstoffverschnitte wiederverwertet werden können und dadurch einer erneuten Verwendung zugänglich sind.

Trotz des Einsatzes dieser Schaumstoffproduktionsreststoffe, post-consumer-Schaumstoffe und Schaumstoffverschnitte auf Basis von Isolierungsschaumstoffen und optional Weichschaumstoffen erhält man überraschenderweise Formteile, Blöcke und Zylinder mit hervorragenden Isolierungseigenschaften und hervorragenden, je nach gewünschter Anwendung ausgeprägten, mechanischen Eigenschaften, die mit denen von frisch, das heißt direkt aus Polyisocyanaten und gegenüber Isocyanaten reaktiven Komponenten, hergestellten Formteilen, Blöcken oder Zylindern vergleichbar sind.

Die Flocken aus Isolierungsschaumstoff können aus allen bekannten zur Isolierung geeigneten Materialien bestehen, beispielsweise Polystyrol, Resol, Glaswolle, Steinwolle, Polyurethan und/oder Polyisocyanurat. Es können auch Kombinationen der vorgenannten Materialien verwendet werden. Bevorzugt bestehen die Flocken aus Isolierungsschaumstoff zu wenigstens 75 Gew.-%, mehr bevorzugt zu wenigstens 90 Gew.-%, am meisten bevorzugt zu wenigstens 95 Gew.-% aus Polyurethan und/oder Polyisocyanurat bestehen.

Die Flocken aus Weichschaumstoff können aus allen bekannten geeigneten Materialien bestehen, beispielsweise Latex oder Polyurethan. Es können auch Kombinationen von unterschiedlichen Materialien, beispielsweise Latex und Polyurethan, verwendet werden. In einer Ausführungsform bestehen die Flocken aus Weichschaumstoff zu wenigstens 75 Gew.-%, bevorzugt wenigstens 90 Gew.-%, mehr bevorzugt wenigstens 95 Gew.-% aus Polyurethan.

In einer weiteren Ausführungsform umfasst das in Schritt ii. erhaltene Gemisch wenigstens 60 Gew.- %, bevorzugt wenigstens 75 Gew.-%, mehr bevorzugt wenigstens 90 Gew.-%, Schaumstoffflocken, jeweils bezogen auf die Gesamtmenge des Gemischs.

In einer Ausführungsform umfassen die Schaumstoffflocken A im Wesentlichen keine Flocken aus Weichschaumstoff A1 oder keine Flocken aus Weichschaumstoff A1. In einer anderen Ausführungsform umfassen die Schaumstoffflocken A Flocken aus Weichschaumstoff A1, zum Beispiel 2 - 50 Gew.-% oder 5 - 50 Gew.-%, bevorzugt 15 - 45 Gew.-%, mehr bevorzugt 25 - 45 Gew.-%, jeweils bezogen auf die Gesamtmenge an Schaumstoffflocken.

Im Sinne dieser Anmeldung bedeuten der Ausdruck "X umfasst im Wesentlichen kein Y" und analoge Formulierungen, dass X kein Y umfasst oder X Y nur in nicht zu vermeidenden Verunreinigungsmengen umfasst.

In einer weiteren Ausführungsform umfasst das in Schritt ii. erhaltene Gemisch 2 - 30 Gew.-%, bevorzugt 5 - 10 Gew.-% oder 10 - 20 Gew.-% Bindemittel B, jeweils bezogen auf die Gesamtenge des Gemischs.

Insbesondere umfasst das in Schritt ii. erhaltene Gemisch 5 - 10 Gew.-%, bezogen auf die Gesamtmenge des Gemischs, Bindemittel B, wenn die Schaumstoffflocken A einen hohen Anteil an Flocken aus Isolierungsschaumstoff A2 aufweisen, zum Beispiel wenigstens 80 Gew.-%, wenigstens 90 Gew.-%, wenigstens 95 Gew.-% oder wenigstens 98 Gew.-%, oder wenn die Schaumstoffflocken A im Wesentlichen aus den Flocken aus Isolierungsschaumstoff A2 bestehen oder aus den Flocken aus Isolierungsschaumstoff A2 bestehen.

Insbesondere umfasst das in Schritt ii. erhaltene Gemisch 10 - 30 Gew.-% oder 10 - 20 Gew.-%, jeweils bezogen auf die Gesamtmenge des Gemischs, Bindemittel B, wenn die Schaumstoffflocken A einen relativ hohen Anteil an Flocken aus Weichschaumstoff A1 aufweisen, zum Beispiel 5 - 50 Gew.-%, 10 - 50 Gew.-% oder 20 - 45 Gew.-%.

In einer Ausführungsform handelt es sich bei dem Bindemittel im Wesentlichen um ein Polyisocyanat B1, oder das Bindemittel B umfasst ein Polyisocyanat B1 und eine gegenüber Isocyanaten reaktive Komponente B2, wobei das Polyisocyanat B1 ein Prepolymer B1-1 umfassen kann oder im Wesentlichen aus einem Prepolymer B1-1 bestehen kann.

Bevorzugt handelt es sich bei dem Bindemittel B im Wesentlichen um ein Polyisocyanat B1 oder eine Mischung aus einem Polyisocyanat B1 und einer gegenüber Isocyanaten reaktiven Komponente B2, wenn die Schaumstoffflocken A einen hohen Anteil an Flocken aus Isolierungsschaumstoff A2 aufweisen, zum Beispiel wenigstens 80 Gew.-%, wenigstens 90 Gew.-%, wenigstens 95 Gew.-% oder wenigstens 98 Gew.-%, oder wenn die Schaumstoffflocken A im Wesentlichen aus den Flocken aus Isolierungsschaumstoff A2 bestehen oder aus den Flocken aus Isolierungsschaumstoff A2 bestehen.

Bevorzugt handelt es sich bei dem Bindemittel B um eine Mischung aus einem Polyisocyanat B1 und einer gegenüber Isocyanaten reaktive Komponente B2, wenn die Schaumstoffflocken A einen relativ hohen Anteil an Flocken aus Weichschaumstoff A1 aufweisen, zum Beispiel 5 - 50 Gew.-%, 10 - 50 Gew.-% oder 20 - 45 Gew.-%. Besonders bevorzugt handelt es sich in diesem Fall um eine Mischung aus einem Prepolymer B1-1 und einer gegenüber Isocyanaten reaktiven Komponente B2.

Geeignete gegenüber Isocyanaten reaktive Komponenten B2, die im Bindemittel B verwendet werden können, sind dem Fachmann an sich bekannt. Bevorzugt umfasst die gegenüber Isocyanaten reaktive Komponente B2 wenigstens ein Polyetherpolyol, Polyesterpolyol, Polyetheresterpolyol, Polycarbonatpolyol und Polyether-Polycarbonatpolyol oder eine Mischung daraus.

Bevorzugt weist die gegenüber Isocyanaten reaktive Komponente B2 ein mittleres Molekulargewicht von 1.800 bis 12.000 g/mol, vorzugsweise 3.000 bis 7.000 g/mol und eine mittlere Funktionalität von 2,6 bis 3,0 und besonders bevorzugt von 2,8 bis 3,0 auf.

Bei den oben genannten Polyetherpolyolen handelt es sich um die dem Fachmann bekannten, in der Polyurethan/Polyisocyanuratsynthese einsetzbaren Polyetherpolyole oder Mischungen aus unterschiedlichen Polyetherpolyolen. Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Bevorzugt enthält die gegenüber Isocyanaten reaktive Komponente B2 bezogen auf sein Gesamtgewicht mindestens 50 Gew.-% Polyetherpolyol. Derartige Komponenten zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen oder deren Derivate sind zur Herstellung dieser Polyetheresterpolyole geeignet. Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung von Reaktionsprodukten, die durch die Umsetzung von organischen Dicarbonsäuren und deren Derivaten sowie Komponenten mit Zerewitinoff-aktiven Wasserstoffen erhalten werden, hergestellt werden.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Zur Herstellung der Polyesterpolyole kommen insbesondere auch biobasierte Ausgangsstoffe und/oder deren Derivate in Frage. Insbesondere bevorzugt sind Ester der Rizinolsäure mit mehrfunktionellen Alkoholen, z.B. Glycerin.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Weiterhin kann die gegenüber Isocyanaten reaktive Komponente B2 niedermolekulare gegenüber Isocyanaten reaktive Verbindungen umfassen, insbesondere di- oder trifunktionelle Amine und Alkohole, mit Molekulargewichten von weniger als 400 g/mol.

Neben den oben beschriebenen Polyolen können in der gegenüber Isocyanaten reaktive Komponente B2 weitere Isocyanat-reaktive Verbindungen enthalten sein, beispielsweise Graft-Polyole, Polyamine, Polyaminoalkohole und Polythiole.

Geeignete Polyisocyanate B1, die als oder im Bindemittel B verwendet werden können, umfassen Isocyanate mit einer NCO-Funktionalität von ≥ 2. Beispiele solcher Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(isocyanatocyclohexyl)methane) oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanate B1, die als oder im Bindemittel B verwendet werden können, werden bevorzugt Mischungen der Isomeren des Diphenylmethandiisocyanats ("monomeres MDI", abgekürzt "mMDI"), das heißt 4,4'-Diphenylmethandiisocyanat, 2,4'-Diphenylmethandiisocyanat und 2,2'-Diphenylmethandiisocyanat, und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenylpolymethylenpolyisocyanate, d.h. Gemische der höherkernigen Homologen des Diphenylmethylendiisocyanats, welche eine NCO-Funktionalität > 2 aufweisen und folgende Summenformel aufweisen: C₁₅H₁₀N₂O₂ [C₈H₅NO]ₙ, wobei n = ganze Zahl > 0 ist.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur mit eingesetzt werden.

Besonders bevorzugt wird ein pMDI mit einer Viskosität von weniger als 800 mPa·s verwendet.

Statt oder zusätzlich zu den oben genannten Polyisocyanaten können auch geeignete NCO-Prepolymere B1-1 als Polyisocyanate B1 im Bindemittel B eingesetzt werden. Die Prepolymere B1-1 sind herstellbar durch Umsetzung eines oder mehrerer Polyisocyanate mit einem oder mehreren Polyolen, bevorzugt durch Umsetzung eines der genannten Polyisocyanate, besonders bevorzugt durch Umsetzung von MDI oder pMDI mit einem Polyol. Besonders bevorzugt sind Prepolymere mit einer Viskosität bei 25 °C von weniger als 1400 mPa·s, insbesondere bevorzugt mit einer Viskosität bei 25 °C von höchstens 1300 mPa·s.

Zusatz- und/oder Hilfsmittel C sind die aus dem Stand der Technik und dem Fachmann bekannten und üblichen Zusatz- und/oder Hilfsmittel, beispielsweise oberflächenaktive Substanzen, Stabilisatoren, Füllstoffe, Farbstoffe, Pigmente, Flammschutzmittel wie Melamin, Blähgraphit oder Aluminiumhydroxid, Antistatika, Hydrolyseschutzmittel und/oder fungistatisch und bakteriostatisch wirkende Substanzen.

Außerdem kann das Gemisch auch Verstärkungsmaterialien, beispielsweise Verstärkungsfasern wie Jute- oder Glasfasern, enthalten.

In einer Ausführungsform werden die Schaumstoffflocken zumindest teilweise erhalten durch die Schritte
vii. Bereitstellen von Schaumstoffproduktionsreststoffen, post-consumer-Schaumstoffen und/oder Schaumstoffverschnitten;
viii.Zerkleinern der in Schritt vii. bereitgestellten Schaumstoffproduktionsreststoffe, post-consumer-Schaumstoffe und/oder Schaumstoffverschnitte, um die Schaumstoffflocken zu erhalten.

Das Zerkleinern der Schaumstoffproduktionsreststoffe, post-consumer-Schaumstoffe und/oder Schaumstoffverschnitte kann beispielsweise mit handelsüblichen Geräten wie Schneidemühlen oder Shreddern erfolgen.

In einer Ausführungsform weisen die Schaumstoffflocken eine Siebgröße von 2-60 mm, bevorzugt 8 - 25 mm, jeweils bestimmt nach DIN 66165, auf.

Im Sinne dieser Anmeldung handelt es sich bei der Siebgröße von Flocken um den Lochdurchmesser eines Siebes, mit dem die Flocken ausgesiebt wurden. Die Größe der Flocken, die das entsprechende Sieb passieren, kann hierbei von der Flexibilität der Flocken abhängen, das heißt Weichschaumstoffflocken können ein Sieb einer bestimmten Siebgröße auf Grund ihrer Flexibilität bzw. Kompressibilität auch passieren, wenn ihre nominelle Größe die Siebgröße bis zu einem gewissen Grad übersteigt.

In einer weiteren Ausführungsform handelt es sich bei den Schaumstoffflocken zu wenigstens 50 Gew.-%, bevorzugt wenigstens 70 Gew.-%, mehr bevorzugt wenigstens 85 Gew.-% um aus Schaumstoffproduktionsreststoffen, post-consumer-Schaumstoffen und/oder Schaumstoffverschnitten erhaltene Schaumstoffflocken.

In einer Ausführungsform wird das Verdichten des Flockenkuchens in Schritt iv. in wenigstens zwei Teilschritten, in denen der Flockenkuchen um Teilverdichtungsfaktoren von jeweils < VF verdichtet wird, durchgeführt.

Erfindungsgemäß wird der Flockenkuchen in Schritt iv. um einen Verdichtungsfaktor VF ≥ 1,2 verdichtet. Dieses Verdichten kann aus mehreren Teilschritten bestehen, in denen zunächst der Flockenkuchen um einen Teilverdichtungsfaktor TVF 1 teilverdichtet, auch als "vorverdichtet" bezeichnet, wird, bevor der teilverdichtete Flockenkuchen in einem weiteren Schritt um einen Teilverdichtungsfaktor TVF 2 oder mehreren weiteren Schritten um Teilverdichtungsfaktoren TVF2, TVF 3, etc. weiter verdichtet wird. Es ist offensichtlich, dass die Teilverdichtungsfaktoren kleiner als der Verdichtungsfaktor gemäß Schritt iv. sind und das Produkt der Teilverdichtungsfaktoren dem Verdichtungsfaktor entspricht. Das Verfahren kann bevorzugt so durchgeführt werden, dass ein Teilschritt des Verdichtens vor dem Erwärmen gemäß Schritt iv. und ein weiterer Teilschritt während des Erwärmens gemäß Schritt iv. durchgeführt wird, wobei jeweils, unabhängig voneinander, auch mehrere Teilschritte des Verdichtens statt eines einzelnen Teilschritts vor dem Erwärmen oder während des Erwärmens durchgeführt werden können.

Bevorzugt wird der verdichtete Flockenkuchen in Schritt iv. auf mindestens 30 °C erwärmt, mehr bevorzugt auf mindestens 60 °C, noch mehr bevorzugt auf mindestens 70 °C.

Bevorzugt umfasst der Schritt iv. einen Schritt
ix. Einbringen oder Erzeugen von Wasserdampf mit einer Temperatur von wenigstens 100 °C in den bzw. in dem verdichteten Flockenkuchen.

Zur Beschleunigung des Verfahrens kann Wasserdampf mit einer Temperatur von wenigstens 100 °C, beispielsweise mehr als 100 °C - 150 °C, 105 - 145 °C oder 110 - 130 °C genutzt werden. Dieser Wasserdampf kann von außen in den verdichteten Flockenkuchen eingebracht werden, wobei das Einbringen auch mittels gegenüber Umgebungsdruck erhöhtem Druck stattfinden kann. Der Wasserdampf kann zum Beispiel für mindestens 30 s, zum Beispiel 30 - 60 s, in den verdichteten Flockenkuchen eingebracht werden. Er kann auch dadurch erzeugt werden, dass sich in dem verdichteten Flockenkuchen befindendes Wasser durch Erwärmen des verdichteten Flockenkuchens verdampft wird.

In einer Ausführungsform umfasst das Verfahren einen Schritt
x. Anwendung von mechanischen Vibrationen oder anderen Schwingungsvorgängen auf den Flockenkuchen, um einen möglichst homogen verteilten Flockenkuchen zu erhalten.

Auf diese Weise kann verhindert werden, dass der Flockenkuchen unerwünschte Inhomogenitäten, beispielsweise Hohlräume im Flockenkuchen, die sich etwa durch verkantete Schaumstoffflocken bilden können, aufweist.

Gegenstand der Erfindung ist weiterhin ein Formteil, Block oder Zylinder, erhältlich oder erhalten nach dem erfindungsgemäßen Verfahren.

Weiterhin können die erfindungsgemäß erhaltenen Blöcke oder Zylinder zu Platten- oder Bahnenware konfektioniert werden.

In einer Ausführungsform weist das Formteil, der Block oder Zylinder eine Wärmeleitfähigkeit von weniger als 35 mW m⁻¹K⁻¹, bevorzugt von weniger als 33 mW m⁻¹K⁻¹, mehr bevorzugt von weniger als 33 mW m⁻¹K⁻¹,jeweils bestimmt nach DIN EN 13165, auf.

In einer weiteren Ausführungsform weist das Formteil, der Block oder Zylinder eine Dichte von höchstens 60 kg m⁻³, bevorzugt höchstens 50 kg m⁻³ auf.

Gegenstand der Erfindung ist schließlich die Verwendung des erfindungsgemäßen Formteils, Blocks oder Zylinders als Dämmplatte oder zur Herstellung einer Dämmplatte.

Die Erfindung soll anhand der nachfolgenden Beispiele und Vergleichsbeispiele näher erläutert werden, ohne dass sie in ihrem Umfang durch die Beispiele eingeschränkt wird.

### Experimente

Verfahren zur Herstellung erfindungsgemäßer Flockenverbundmaterialien:
Es wurden Weichschaumstoffflocken und Flocken aus Isolierungsschaumstoff für 3 - 5 min im Trommelmischer homogen vermischt. Während dieser Zeit wurde ein Bindemittelgemisch aus einem Polyol und einem Polyisocyanat über eine Zweistoffdüse in den Trommelmischer gegeben, so dass ein Gemisch aus Flocken und Bindemittel erhalten wurde. Die jeweils eingesetzten Mengen sind der Tabelle 1 (alle Angaben in Gew.-%) zu entnehmen.
a) In einer ersten Variante (Heizpressung) wurde eine Vorpresskammer mit einem mit 120 g Wasser befeuchteten Zellulosevlies ausgelegt, auf dem das Gemisch aus Flocken und Bindemittel homogen verteilt wurde. Der so erhaltene Flockenkuchen wurde mit einem weiteren mit 120 g Wasser befeuchteten Zellulosevlies bedeckt und für 90 s vorgepresst. Der vorverdichtete Flockenkuchen wurde für 420 s in einer auf 170 °C temperierten Heizpresse gepresst, so dass ein Verdichtungsfaktor von mindestens 1,2 erzielt und eine Flockenverbundmatte erhalten wurde. Abschließend wurde die Matte konfektioniert und abgeschliffen.
b) In einer zweiten Variante (Wasserdampfpressung) wurde das Gemisch aus Flocken und Bindemittel homogen auf einem wasserdampfdurchlässigen Metallgitter in einer Vorpresskammer verteilt. Der so erhaltene Flockenkuchen wurde für 90 s vorgepresst. Der vorverdichtete Flockenkuchen wurde auf dem wasserdampfdurchlässigen Metallgitter auf einen Wasserdampfkasten gelegt, woraufhin für 30 s etwa 100 °C warmer Wasserdampf aus dem Wasserdampfkasten durch den vorverdichteten Flockenkuchen geleitet und dadurch eine Flockenverbundmatte erhalten wurde. Abschließend wurde die Matte konfektioniert und abgeschliffen.

Die erfindungsgemäß erhaltenen Formteile, die ohne Weichschaumstoffflocken hergestellt wurden, weisen mechanische und thermische Eigenschaften auf, die denen von bereits kommerziell erhältlichen Dämmmaterialien, die aus anderen Materialien hergestellt wurden, entsprechen. Die erfindungsgemäß erhaltenen Formteile, die mit Weichschaumstoffflocken hergestellt wurden weisen eine für Schaumstoffe bisher nicht zugängliche Kombination aus Flexibilität und thermischer Isolierung auf. Die Ergebnisse der Bestimmung der mechanischen und thermischen Eigenschaften finden sich in Tabelle 2.

Folgende Rohstoffe wurden eingesetzt:
Weichschaumstoff: Weichschaumstoffflocken aus Polyurethan
Flockengröße: 5 - 12 mm (Anteil von Staub mit Durchmesser < 250 µm: < 5 Gew.-%)
Dichte: 40 - 80 kg m⁻³
Hartschaumstoff: Hartschaumstoffflocken aus Polyisocyanurat-Isolierungsschaumstoff mit einer Wärmeleitfähigkeit von 22 - 24 mW m⁻¹K⁻¹
Dichte: 28 - 45 kg m⁻³
Siebgröße: 16 mm
Polyisocyanat 1: NCO-Prepolymer aus 4,4'-MDI und einem Propylenglykol-initiierten Polyetherpolyol mit Propylenoxid als Alkylenoxid, mit einem NCO-Gehalt von 19,5 - 20,5% und einer Viskosität bei 25 °C von 900 - 1300 mPa·s.
Polyisocyanat 2: polymeres MDI mit einem NCO-Gehalt von 30,5 - 32,5 Gew.-% und einer Viskosität bei 25 °C von 160 - 240 mPa·s umfassend 4,4'-MDI, Isomere und Homologe
Polyol: Glycerin-initiiertes Polyetherpolyol mit Ethylenoxid als Alkylenoxid und einer Hydroxylzahl von 35 - 39 mg KOH/g.

Verwendete Messmethoden:
Rohdichte: DIN EN 845-2009
Druckfestigkeit: DIN EN 826 : 05 / 2013
Querzugfestigkeit: DIN EN 14509/DIN 53292
Kleinbrennertest: DIN EN ISO 11925-2
Stauchhärte: DIN EN ISO 3386-1-2015
Wärmeleitzahl: DIN EN 13165
Druckversuch (weich) (Biegefestigkeit): DIN EN ISO 3386-1 : 10 / 2015

**Tabelle 1**

| **Beispiel** | 1 | 2 | 3 | 4 |
|---|---|---|---|---|
| **Verfahren** | Heizpress- | Heizpress- | Wasserdampfpress- | Wasserdampfpress- |
| **Flocken** | 80% | 90% | 80% | 90% |
| **Isolierschaumstoff, Menge bezogen auf Flocken** | 80% | 100% | 80% | 100% |
| **Weichschaumstoff, Menge bezogen auf Flocken** | 20% | 0% | 20% | 0% |
| **Bindemittel** | 20% | 10% | 20% | 10% |
| **Polyisocyanat 2, Menge bezogen auf Bindemittel** | 0% | 90% | 0% | 90% |
| **Polyisocyanat 1, Menge bezogen auf Bindemittel** | 80% | 0 | 80% | 0 |
| **Polyol, Menge bezogen auf Flocken** | 20% | 10% | 20% | 10% |

**Tabelle 2**

| Beispiel | Rohdichte [kg/m³] | Druckfestigkeit [MPa] | Wärmeleitzahl [mW m⁻¹K¹] | | | Querzugfestigkeit [%] | | Kleinbrennertest | | Biegefestigkeit (3 Punkt Biegung) | | | Stauchhärte [kPa] | |
|---|---|---|---|---|---|---|---|---|---|---|---|---|---|---|
| | | Spannung 10% Verf. | Initial Wert | Wert nach 7 Tagen | Wert nach 21 Tagen | Max. Dehnungskraft | Bruchdehnung | max. Flamme | Brandklasse | Kraft Bruch [N] | Spannung Bruch [N/mm^2] 2] | Dehnung Bruch [mm] | 20% Belastung | 20% |
| 1 | 42,6 | 0,06 | 32,1 | 32,2 | 32,6 | 2,46 | 2,83 | 130 | E | | | | 113,7 | 0 |
| 2 | 47,1 | 0,122 | 30,2 | 30,4 | 31,1 | 2,21 | 2,24 | 100 | E | 13 | 0,19 | 4,7 | 117,6 | 0 |
| 3 | 43 | | 31,58 | | | | | 189 | F | | | | 54,5 | 0,1 |
| 4 | 48,8 | 0,165 | 30,3 | | 31,3 | 2,71 | 2,72 | 115 | E | | | | | |

## Patentansprüche

1. Verfahren zur Herstellung von Formteilen, Blöcken oder Zylindern umfassend die Schritte
i. Bereitstellen von
A. Schaumstoffflocken umfassend
A1.0 - 50 Gew.-%, bezogen auf die Gesamtmenge an Schaumstoffflocken, Flocken aus Weichschaumstoff und
A2.50 - 100 Gew.-%, bezogen auf die Gesamtmenge an Schaumstoffflocken, Flocken aus Isolierungsschaumstoff, der eine Geschlossenzelligkeit von wenigstens 80%, bestimmt nach ISO 4590:2002, und eine Wärmeleitfähigkeit von höchstens 30 mW m⁻¹K⁻¹, bestimmt nach DIN EN 13165, aufweist,
wobei die Summe der Mengen an A1 und A2 100 Gew.-% ergibt,
B. einem bei 20 °C flüssigen Bindemittel, das wenigstens eine reaktionsfähige Isocyanatgruppen aufweisende Komponente und weniger als 0,5 Gew.-% physikalisches Treibmittel umfasst, bezogen auf die Gesamtmenge an Bindemittel,
C. gegebenenfalls Zusatz- und/oder Hilfsmitteln;
ii. Vermischen der in Schritt i. bereitgestellten Schaumstoffflocken und des in Schritt i. bereitgestellten Bindemittels sowie gegebenenfalls der in Schritt i. bereitgestellten Zusatz- und/oder Hilfsmittel, um ein Gemisch zu erhalten;
iii. Befüllen einer Form mit dem in Schritt ii. erhaltenen Gemisch oder Auftragen des in Schritt ii. erhaltenen Gemischs auf eine Form, um einen Flockenkuchen zu erhalten;
iv. Verdichten des Flockenkuchens um einen Verdichtungsfaktor VF ≥ 1,2, und
Erwärmen des Flockenkuchens, um das Formteil, den Block oder den Zylinder zu erhalten, wobei das Erwärmen während und/oder nach dem Verdichten erfolgt;
v. Entformen des Formteils, Blocks oder Zylinders.

2. Verfahren gemäß Anspruch 1, wobei die Flocken aus Isolierungsschaumstoff zu wenigstens 75 Gew.-%, bevorzugt zu wenigstens 90 Gew.-%, mehr bevorzugt zu wenigstens 95 Gew.- % aus Polyurethan und/oder Polyisocyanurat bestehen.

3. Verfahren gemäß Anspruch 1 oder 2, wobei die Flocken aus Weichschaumstoff zu wenigstens 75 Gew.-%, bevorzugt wenigstens 90 Gew.-%, mehr bevorzugt wenigstens 95 Gew.-% aus Polyurethan bestehen.

4. Verfahren gemäß einem der vorstehenden Ansprüche, wobei das in Schritt ii. erhaltene Gemisch wenigstens 60 Gew.-%, bevorzugt wenigstens 75 Gew.-%, mehr bevorzugt wenigstens 90 Gew.-%, Schaumstoffflocken umfasst, jeweils bezogen auf die Gesamtmenge des Gemischs.

5. Verfahren gemäß einem der vorstehenden Ansprüche, wobei das in Schritt ii. erhaltene Gemisch 2 - 30 Gew.-%, bevorzugt 5 - 10 Gew.-% oder 10 - 20 Gew.-% Bindemittel umfasst, jeweils bezogen auf die Gesamtenge des Gemischs.

6. Verfahren gemäß einem der vorstehenden Ansprüche wobei die Schaumstoffflocken zumindest teilweise erhalten werden durch die Schritte
vii. Bereitstellen von Schaumstoffproduktionsreststoffen, post-consumer-Schaumstoffen und/oder Schaumstoffverschnitten;
viii.Zerkleinern der in Schritt vii. bereitgestellten Schaumstoffproduktionsreststoffe, post-consumer-Schaumstoffe und/oder Schaumstoffverschnitte, um die Schaumstoffflocken zu erhalten.

7. Verfahren gemäß einem der vorstehenden Ansprüche, wobei die Schaumstoffflocken eine Siebgröße von 5 - 60 mm, bevorzugt 15 - 25 mm, jeweils bestimmt nach DIN 66165, aufweist.

8. Verfahren gemäß einem der vorstehenden Ansprüche, wobei es sich bei den Schaumstoffflocken zu wenigstens 50 Gew.-%, bevorzugt wenigstens 70 Gew.-%, mehr bevorzugt wenigstens 85 Gew.-% um aus Schaumstoffproduktionsreststoffen, post-consumer-Schaumstoffen und/oder Schaumstoffverschnitten erhaltene Schaumstoffflocken handelt.

9. Verfahren gemäß einem der vorstehenden Ansprüche, wobei es sich bei dem Bindemittel im Wesentlichen um ein Polyisocyanat oder um eine Mischung aus einem Polyisocyanat und einem Polyol handelt.

10. Verfahren gemäß einem der vorstehenden Ansprüche, wobei das Verdichten des Flockenkuchens in Schritt iv. in wenigstens zwei Teilschritten, in denen der Flockenkuchen um Teilverdichtungsfaktoren von jeweils < VF verdichtet wird, durchgeführt wird.

11. Verfahren gemäß einem der vorstehenden Ansprüche, wobei Schritt iv. einen Schritt
ix. Einbringen oder Erzeugen von Wasserdampf mit einer Temperatur von wenigstens 100 °C in den bzw. in dem verdichteten Flockenkuchen
umfasst.

12. Formteil, Block oder Zylinder, erhältlich oder erhalten nach dem Verfahren gemäß einem der Ansprüche 1 bis 11.

13. Formteil, Block oder Zylinder gemäß Anspruch 12, wobei das Formteil, der Block oder Zylinder eine Wärmeleitfähigkeit von weniger als 35 mW m⁻¹K⁻¹, bevorzugt von weniger als 33 mW m⁻¹K⁻¹, mehr bevorzugt von weniger als 30 mW m⁻¹K⁻¹, jeweils bestimmt nach DIN EN 13165, aufweist.

14. Formteil, Block oder Zylinder gemäß Anspruch 12 oder Anspruch 13, wobei das Formteil, der Block oder Zylinder eine Dichte von höchstens 60 kg m⁻³, bevorzugt höchstens 50 kg m⁻³, aufweist.

15. Verwendung des Formteils, Blocks oder Zylinders gemäß einem der Ansprüche 12 bis 14 als oder zur Herstellung einer Dämmplatte.
